(19) Europäisches Patentamt
European Patent Office
Office européen des brevets

(11) EP 2 145 911 A1

(12) **EUROPEAN PATENT APPLICATION**

(43) Date of publication:
**20.01.2010 Bulletin 2010/03**

(51) Int Cl.:
***C08G 77/62*** *(2006.01)* ***C08G 65/336*** *(2006.01)*

(21) Application number: **09009291.7**

(22) Date of filing: **16.07.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **17.07.2008 JP 2008186015**

(71) Applicant: **Shin-Etsu Chemical Co., Ltd.**
**Tokyo (JP)**

(72) Inventors:
- **Yamaguchi, Koichi**
  **Annaka-shi**
  **Gunma-ken (JP)**
- **Kishita, Hirofumi**
  **Annaka-shi**
  **Gunma-ken (JP)**

(74) Representative: **Peters, Hajo et al**
**Graf von Stosch**
**Patentanwaltsgesellschaft mbH**
**Prinzregentenstrasse 22**
**80538 München (DE)**

(54) **Perfluoropolyether-modified polysilazane and surface treatment agent using same**

(57) A perfluoropolyether-modified polysilazane is provided. The polysilazane consists of units having formula (1):

$$F(C_xF_{2x}O)_mC_yF_{2y}\text{-}Q\text{-}Si(NH)_{1.5} \qquad (1)$$

wherein Q represents a divalent organic group, m represents an integer of 1 or greater, and x and y each represents an integer of 1 to 3. The polysilazane can be cured at normal temperatures, forms a tough coating on a substrate surface without application of a primer, and is useful as a surface treatment agent that is capable of maintaining water and oil repellency and releasability and the like, over a long period of time.

EP 2 145 911 A1

## Description

### BACKGROUND OF THE INVENTION

#### 1. Field of the Invention

The present invention relates to a novel perfluoropolyether-modified polysilazane that is capable of forming a cured coating that exhibits excellent water and oil repellency, releasability and anti-soiling properties, and also relates to a surface treatment agent that contains the perfluoropolyether-modified polysilazane as a main component, and an article containing a cured coating of the polysilazane.

#### 2. Description of the Prior Art

Generally, perfluoropolyether group-containing compounds have an extremely low surface free energy, and therefore exhibit excellent water and oil repellency, chemical resistance, lubricity, releasability and anti-soiling properties and the like. These properties are widely utilized in the commercial production of water and oil repellent agents and anti-soiling agents for papers and fibers and the like, lubricants for magnetic recording media, oil-proof agents for precision equipment, release agents, cosmetic materials, and protective films and the like.

However, these properties also mean that perfluoropolyether group-containing compounds exhibit poor pressure-sensitive adhesion or adhesion to other substrates, and even if a compound is able to be applied to the surface of a substrate, forming a coating that bonds to the substrate surface has proven problematic.

On the other hand, silane coupling agents are well known for their ability to bond organic compounds to the surfaces of substrates such as glass or cloth. Silane coupling agent molecules contain silyl groups (and typically alkoxysilyl groups) that exhibit reactivity towards organic functional groups. These alkoxysilyl groups undergo a self-condensation reaction in the presence of moisture within the air or the like, thus forming a siloxane that generates a coating. At the same time, the silane coupling agent also undergoes chemical and physical bonding to the surface of the glass or metal or the like, thereby forming a tough coating with superior durability. These properties mean that silane coupling agents are widely used as coating agents for all manner of substrate surfaces.

In order to utilize the properties outlined above, Patent Document 1 discloses a fluoroaminosilane compound represented by a formula (a) shown below:

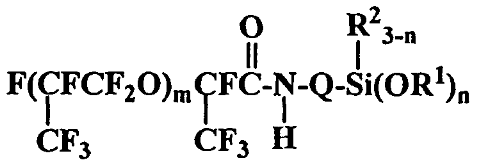

(a)

(wherein $R^1$ and $R^2$ represent alkyl groups of 1 to 4 carbon atoms, Q represents $CH_2CH_2CH_2$ or $CH_2CH_2NHCH_2CH_2CH_2$, m represents an integer of 1 to 4, and n represents 2 or 3).

Although this fluoroaminosilane compound can be diluted with typical solvents, because the proportion (% by mass) of hydrolyzable groups within each molecule is small, considerable time is required for curing, and the compound cannot really be claimed to exhibit satisfactory performance in terms of formation of a treated coating.

Furthermore, a perfluoropolyether-modified aminosilane represented by a formula (b) shown below has also been proposed (see Patent Document 2).

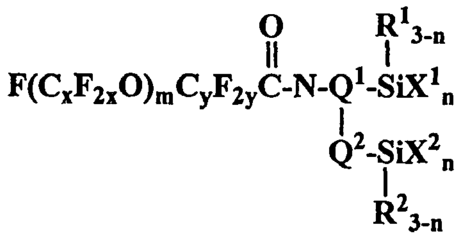

(b)

(wherein $X^1$ and $X^2$ represent hydrolyzable groups, $R^1$ and $R^2$ represent lower alkyl groups, $Q^1$ and $Q^2$ represent divalent organic groups, m represents an integer of 6 to 50, n represents 2 or 3, and x and y each represents an integer of 1 to 3.)

This perfluoropolyether-modified aminosilane exhibits excellent water and oil repellency, anti-soiling properties, chemical resistance, lubricity and releasability and the like, and because it contains two hydrolyzable silyl groups within each molecule, offers a higher proportion of hydrolyzable groups within each molecule, and therefore a higher level of reactivity, than conventional aminosilanes (such as the fluoroaminosilane compounds represented by formula (a)). However, because the hydrolyzable groups exist only at one terminal, the adhesiveness of the compound to substrates is still unsatisfactory and durability also remains a problem, meaning ensuring favorable retention of the desired properties over an extended period of time is impossible, with inadequate scratch resistance being particularly problematic.

Furthermore, Patent Document 3 discloses a water repellency treatment method for an inorganic substrate wherein the inorganic substrate is subjected to a surface treatment by dipping in an aqueous solution of an acid other than hydrofluoric acid with a pH of not more than 3.0, and a solution of an organosilazane polymer represented by a general formula (c) shown below is then applied to the treated surface and cured to form a water repellent coating.

$$\left( \left[ (RfQ)_a Si(R^1)_b (NR^3)_{\frac{4-a-b}{2}} \right]_m \cdot \left[ (RfQ)_c Si(R^2)_d (R^3)_e O_{\frac{4-c-d-e}{2}} \right]_n \right) \qquad (c)$$

[wherein $R^1$ and $R^2$ may be the same or different, and each represents a hydrogen atom or an unsubstituted or substituted monovalent hydrocarbon group of 1 to 20 carbon atoms, $R^3$ represents a hydrogen atom or an alkyl group, Rf represents a perfluoroalkyl group of 1 to 20 carbon atoms or a perfluoroalkyl ether group of 2 to 35 carbon atoms, Q represents a divalent organic group of 2 to 5 carbon atoms, a represents an integer of 1 to 3 and b represents an integer of 0 to 2 provided that a+b is from 1 to 3, c represents an integer of 0 to 2 and d represents an integer of 1 to 3 provided that c+d is from 1 to 3, and m and n each represents an integer of 1 or greater.]

However, the coating formed from this organosilazane polymer includes siloxane units, and tends to exhibit inferior surface properties such as oil repellency, anti-soiling properties and chemical resistance.

A coating formation agent capable of addressing these problems associated with the conventional technology has been keenly sought.

Moreover, in recent years there have been growing demands for techniques capable of improving soiling resistance or techniques that facilitate the removal of soiling, so that, for example, the window glass within high-rise buildings is more maintenance free, and display surfaces are less prone to fingerprints and therefore exhibit improved appearance and visibility. The development of materials capable of meeting these demands is highly desirable.

[Patent Document 1] JP 58-167597 A
[Patent Document 2] US 6,200,684B1
[Patent Document 3] JP 07-69680 A

SUMMARY OF THE INVENTION

The present invention has been developed in light of the above circumstances, and has an object of providing a perfluoropolyether-modified polysilazane that can be cured at normal temperatures, forms a tough coating on a substrate surface without application of a primer, and is useful as a surface treatment agent that is capable of maintaining a desirable level of performance, including water and oil repellency and releasability and the like, over a long period of time, as well as providing a surface treatment agent containing the perfluoropolyether-modified polysilazane as a main component, and an article that includes a cured coating of the polysilazane.

As a result of intensive investigation aimed at preparing a composition capable of forming a coating with the properties outlined above, the inventors of the present invention discovered that a composition containing, as the active ingredient, a novel perfluoropolyether-modified polysilazane consisting of silazane units represented by formula (1) shown below was ideal.

$$F(C_xF_{2x}O)_mC_yF_{2y}\text{-}Q\text{-}Si(NH)_{1.5} \qquad (1)$$

(wherein Q represents a divalent organic group, m represents an integer of 1 or greater, and x and y each represents an integer of 1 to 3.)

Accordingly, the present invention provides a perfluoropolyether-modified polysilazane represented by the above formula (1), a surface treatment agent containing this perfluoropolyether-modified polysilazane and/or a partial hydrolysis-condensation product thereof as an active ingredient, wherein this active ingredient is dissolved in a polar solvent, and an article that includes a cured coating of this perfluoropolyether-modified polysilazane and/or a partial hydrolysis-condensation product thereof.

The perfluoropolyether-modified polysilazane of the present invention can be cured at normal temperatures, forms a tough coating on a substrate surface without application of a primer, and can form a cured coating that exhibits excellent water and oil repellency, releasability, anti-soiling properties and weather resistance and the like. This cured coating also exhibits excellent properties of chemical resistance and lubricity and the like. Accordingly, the surfaces of all manner of substrates can be improved by coating with this perfluoropolyether-modified polysilazane. The resulting cured coating exhibits powerful adhesion to the substrate even without using a primer, and the above effects can be maintained over a long period of time.

## BRIEF DESCRIPTION OF THE DRAWINGS

[FIG 1] A $^1$H-NMR spectrum of the polysilazane obtained in example 1.
[FIG 2] An IR spectrum of the polysilazane obtained in example 1.
[FIG 3] A $^1$H-NMR spectrum of the polysilazane obtained in example 2.
[FIG. 4] An IR spectrum of the polysilazane obtained in example 2.

## DETAILED DESCRIPTION OF THE PREFERRED EMBODIMENTS

The perfluoropolyether-modified polysilazane according to the present invention is composed solely of units represented by formula (1) shown below.

$$\mathbf{F(C_xF_{2x}O)_mC_yF_{2y}\text{-}Q\text{-}Si(NH)_{1.5}} \qquad (1)$$

(wherein Q represents a divalent organic group, m represents an integer of 1 or greater, and x and y each represents an integer of 1 to 3.)

In formula (1), Q represents a divalent organic group, and preferably represents an alkylene group of 2 to 10 carbon atoms, and more preferably 2 to 4 carbon atoms, such as $-CH_2CH_2-$ or $-CH_2CH_2CH_2-$, an oxyalkylene group of 2 to 10 carbon atoms, and more preferably 2 to 4 carbon atoms, such as $-CH_2OCH_2CH_2CH_2-$, and an amide group represented by a formula -CONR- (wherein R represents a hydrogen atom or a lower alkyl group of 1 to 5 carbon atoms, and preferably 1 to 3 carbon atoms).

m represents an integer of 1 or greater, and is preferably an integer within a range from 2 to 50, more preferably from 2 to 30, and most preferably from 2 to 10.

In the above polysilazane, the perfluoropolyether portion represented by $F(C_xF_{2x}O)_mCyF_2y$- is preferably represented by a formula shown below.

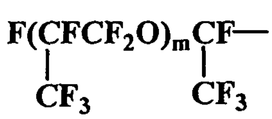

(wherein m is as defined above.)

Specific examples of the unit represented by formula (1) shown above include the units represented by the formulas shown below.

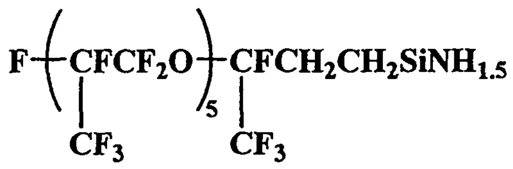

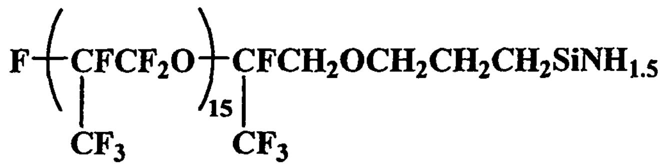

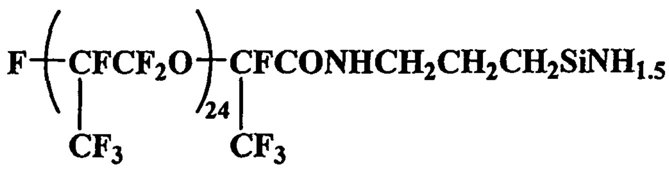

$$F\left(CF_2CF_2CF_2O\right)_{24}CF_2CF_2CH_2CH_2SiNH_{1.5}$$

Molecular structures of the perfluoropolyether-modified polysilazane are, of course, not limited to the structures shown above.

The perfluoropolyether-modified polysilazane of the present invention can be produced using known methods for producing polysilazanes, and the methods include, for example, the production method disclosed in U.S. Pat. No. 2,564,674 which is incorporated herein by reference. Specifically, the perfluoropolyether-modified polysilazane can be obtained comparatively easily by reacting a trihalosilane represented by a formula (2) shown below with ammonia within a solvent.

$$F(C_xF_{2x}O)_mCyF_{2y}\text{-}Q\text{-}SiX_3 \qquad (2)$$

(wherein Q, m, x and y are as defined above, and X represents a halogen atom.)

In formula (2), examples of the halogen represented by X include a chlorine atom or bromine atom, and a chlorine atom is preferred.

[Surface treatment agent]

A surface treatment agent of the present invention includes the aforementioned perfluoropolyether-modified polysilazane and/or a partial hydrolysis-condensation product thereof as an active ingredient.

The surface treatment agent of the present invention may be diluted with an appropriate solvent. Examples of this solvent include fluorine-modified aromatic hydrocarbon solvents such as m-xylene hexafluoride and benzotrifluoride, fluorine-modified ether-based solvents such as methyl perfluorobutyl ether, ethyl perfluorobutyl ether and perfluoro(2-butyltetrahydrofuran), and fluorine-modified alkylamine-based solvents such as perfluorotributylamine and perfluorotripentylamine. In terms of the dissolution properties and wetting properties of the solvent, m-xylene hexafluoride or ethyl perfluorobutyl ether is preferred.

The above solvent may use either a single solvent or a mixture of two or more different solvents, and in either case, is preferably capable of uniformly dissolving the above component(s).

There are no particular restrictions on the amount of solvent used, and the ideal concentration of the surface

treatment agent will vary depending on the treatment method employed, although the solid fraction concentration (namely, the perfluoropolyether-modified polysilazane) within the surface treatment agent is typically within a range from 0.001 to 10% by mass, and preferably from 0.01 to 5% by mass.

Examples of the method used for performing surface treatment of a substrate or base material using the surface treatment agent obtained in the manner described above include methods in which the surface treatment agent is applied to the substrate using a conventional technique such as brush application, dipping, spraying or vapor deposition. Curing the resulting film at ambient temperature enables the formation of a cured coating that has bonded favorably to any of a variety of substrates or base materials. It is thought that the reason the coating bonds favorably to a variety of materials is because the silanol groups generated when the silazane bonds hydrolyze exhibit a high degree of activity, causing a marked improvement in the adhesiveness. As mentioned above, the applied film on the substrate cures at ambient temperature, although the curing process can be accelerated by performing heating via a hot-air treatment or infrared irradiation or the like following application of the surface treatment agent. Furthermore, known silanol condensation catalysts may be added to the surface treatment agent, including organotin compounds (such as dibutyltin dimethoxide and dibutyltin dilaurate), organotitanium compounds (such as tetra-n-butyl titanate), organic acids (such as acetic acid and methanesulfonic acid) and inorganic acids (such as hydrochloric acid and sulfuric acid), and in particular, if acetic acid, tetra-n-butyl titanate or dibutyltin dilaurate or the like is added to the surface treatment agent, then the curing process can be accelerated particularly favorably. Furthermore, if acrylic groups or methacryloyloxy groups or the like are introduced at the organic groups bonded to the aforementioned silazane unit, then the cross-linking degree can be further increased by irradiation with ultraviolet light or an electron beam following the ambient temperature curing. The amount added of the condensation catalyst need only be a catalytic amount, and is typically within a range from 0.001 to 5 parts by mass, and preferably from 0.01 to 1 part by mass, per 100 parts by mass of the polysilazane and/or partial hydrolysis-condensation product thereof.

There are no particular restrictions on the substrate treated with the surface treatment agent, and examples of substrates that may be used include all manner of materials such as paper, cloth, metals or oxides thereof, glass, plastics and ceramics. Specific examples of the substrate are listed below.

- When the surface treatment agent is used as a water and oil repellent: paper, cloth, metals, glass, plastics and ceramics and the like.
- When the surface treatment agent is used as a release agent: pressure-sensitive adhesive tapes, dies for resin molding, rollers and the like.
- When the surface treatment agent is used as an anti-soiling agent: paper, cloth, metals, glass, plastics and ceramics and the like.

Other uses of the surface treatment agent include application as a coating material additive, a resin improver, as a material for improving the fluidity or dispersibility of an inorganic filler, or as a material for improving the lubricity of a tape or film or the like.

The thickness of the cured coating formed on the substrate or article surface described above may be selected in accordance with the nature of the substrate or article.

The surface treatment agent of the present invention can be used, for example, as a surface treatment agent for all manner of articles. In other words, the present invention also provides articles comprising a substrate (namely, a substrate that is used in constructing the article), and a cured coating of the above perfluoropolyether-modified polysilazane and/or partial hydrolysis-condensation product thereof that is formed on the surface of the substrate.

Specifically, a cured coating may be formed for various purposes on the types of articles described below..

Examples include water-repellent and anti-soiling coatings formed on sanitary products such as bathtubs and hand basins, anti-soiling coatings for glass (including window glass and head lamp covers and the like) for transport vehicles such as automobiles, trains and aircraft, water-repellent and anti-soiling coatings for building materials such as external wall materials, oil stain prevention coatings for kitchen building materials, water-repellent, oil-repellent, weather-resistant, anti-soiling, and bill posting-resistant coatings for telephone boxes, water-repellent, oil-repellent and fingerprint-resistant coatings for artworks, anti-soiling coatings for general-purpose industrial glass and glass food dishes, and anti-soiling coatings for optical components.

## EXAMPLES

The present invention is described in further detail below based on a series of examples and comparative examples, although the present invention is in no way limited by the examples presented below.

[Example 1] (Synthesis ofpolysilazane)

A 300 ml three-neck flask fitted with a thermometer, a reflux condenser and a stirrer was charged with 50.6 g of a perfluoropolyether-modified trichlorosilane represented by a formula (3) shown below and 100 g of m-xylene hexafluoride,

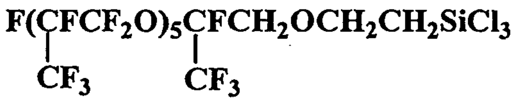

(3)

and when dry ammonia gas was introduced into the stirred liquid, the temperature of the liquid rose as the ammonia gas was bubbled through the liquid, and a white suspension of ammonium chloride was generated. Ammonia gas was introduced until the ammonia reached a state of reflux, and the supply of ammonia gas was then halted, and stirring was continued for 2 hours under reflux conditions. Subsequently, nitrogen gas was introduced into the system while the liquid was stirred under heating for 4 hours, thereby removing the excess ammonia gas. The liquid was then filtered to remove the precipitated ammonium chloride, and the m-xylene hexafluoride was removed from the filtrate by distillation under reduced pressure, yielding 46.6 g of a colorless and transparent liquid. The $^1$H-NMR and IR spectral data for the obtained compound are listed below.
$^1$H-NMR (TMS standard, ppm, see FIG. 1)

$-CH_2C\underline{H}_2Si\equiv$ 0.5 to 0.7
$-SiN\underline{H}-$ 0.7 to 1.0
$-CH_2C\underline{H}_2CH_2-$ 1.6 to 1.8
$-OC\underline{H}_2CH_2-$ 3.5 to 3.6
$=CFC\underline{H}_2OCH_2-$ 3.9 to 4.1

IR (KBr plates, liquid membrane method, $cm^{-1}$, see FIG 2)

3380 (N-H), 2940 to 2880 (C-H), 1310 to 1090 (C-F)

From the above results it was clear that the obtained compound was composed of units represented by a formula shown below.

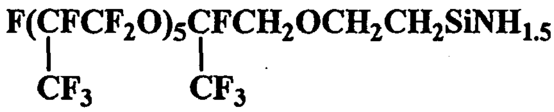

[Example 2] (Synthesis of polysilazane)

With the exception of replacing the perfluoropolyether-modified trichlorosilane represented by formula (3) used in example 1 with 62.4 g of a perfluoropolyether-modified trichlorosilane represented by a formula (4) shown below,

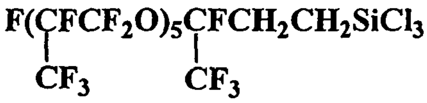

(4)

the same method as example 1 was used to obtain 53.7 g of a colorless and transparent liquid. The $^1$H-NMR and IR spectral data for the obtained compound are listed below. $^1$H-NMR (TMS standard, ppm, see FIG. 3)

$-CH_2C\underline{H}_2Si\equiv$ 0.7 to 0.9
$-SiN\underline{H}-$ 0.9 to 1.0

$=CFC\underline{H_2}CH_2-$ 2.2 to 2.4

IR (KBr plates, liquid membrane method, $cm^{-1}$, see FIG 4)

3420 (N-H), 2950 to 2850 (C-H), 1315 to 1090 (C-F)

From the above results it was clear that the obtained compound was composed of units represented by a formula shown below.

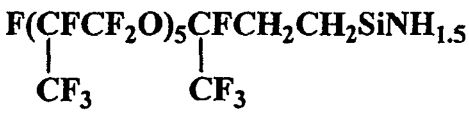

[Example 3] (Synthesis of polysilazane)

With the exception of replacing the perfluoropolyether-modified trichlorosilane represented by formula (3) used in example 1 with a compound represented by a formula (5) shown below,

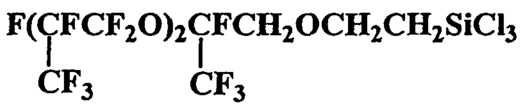

(5)

a compound was obtained using the same method as example 1, and the $^1$H-NMR and IR spectral data confirmed that the obtained compound was composed of units represented by a formula shown below.

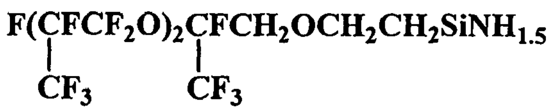

[Examples 4 to 6] (Surface treatment agents)

0.3 g samples of the perfluoropolyether-modified polysilazanes synthesized in examples 1 to 3 were each dissolved in 99.7 g of a fluorine-based solvent Novec HFE-7200 (manufactured by Sumitomo 3M Limited), and a glass sheet (2.5 × 10 × 0.5 cm) was dip-coated in each of the resulting solutions (that is, the glass sheet was coated by immersion in the solution for 10 seconds, followed by gradual raising from the solution at a lifting speed of 150 mm/minute). The glass sheet having a film formed thereon was then left to stand for one hour in an atmosphere at 25°C and 70% relative humidity, thereby converting the film to a cured coating. Using test samples from each of the thus obtained examples, the following evaluations (1) to (3) were conducted.

(1) Evaluation of water and oil repellency

Using a contact angle meter (A3 model, manufactured by Kyowa Interface Science Co., Ltd.), the contact angles for the cured coating relative to water and oleic acid were measured as an evaluation of the water and oil repellency.

(2) Evaluation of releasability

A cellophane pressure-sensitive adhesive tape (width: 19 mm) was bonded to the surface of the cured coating, and the peel strength of the tape was measured as an evaluation of the releasability. Measurement of the peel strength was conducted using a tensile tester, by pulling the tape at an angle of 180° at a peel speed of 300 mm/minute.

(3) Evaluation of coating durability

A cellulose non-woven fabric was brought into contact with the surface of the cured coating, and with a 1 kg load applied to the fabric, the coating was frictioned by rubbing the fabric 4,000 times back and forth across the coating surface. The receding contact angle for water was then measured using the method described above in evaluation (1), and the measured value was used to evaluate the coating durability.

[Comparative example 1]

With the exception of replacing the perfluoropolyether-modified polysilazanes used in examples 4 to 6 with a perfluoropolyether-modified amidosilane composed of units represented by a formula (6) shown below, evaluations were performed using the same methods as the examples. The evaluation results are shown in Table 1.

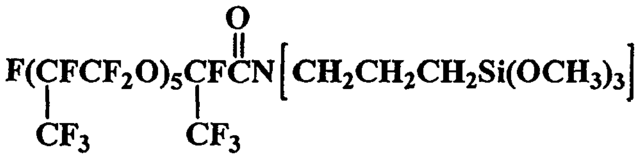

(6)

[Comparative example 2]

With the exception of replacing the perfluoropolyether-modified polysilazanes used in examples 4 to 6 with a perfluoroalkyl-modified polysilazane represented by a formula (7) shown below, evaluations were performed using the same methods as the examples. The evaluation results are shown in Table 1.

$$C_8F_{17}CH_2CH_2SiNH_{1.5} \quad (7)$$

[Table 1]

| | Polymer | Water and oil repellency (degrees) | | Releasability (N/ 19 mm) | Durability (degrees) |
|---|---|---|---|---|---|
| | | Water | Oleic acid | | |
| Example 4 | Example 1 | 114 | 78 | 0.85 | 112 |
| Example 5 | Example 2 | 113 | 79 | 0.78 | 111 |
| Example 6 | Example 3 | 112 | 82 | 1.18 | 110 |
| Comparative example 1 | Formula (6) | 107 | 72 | 1.40 | 80 |
| Comparative example 2 | Formula (7) | 110 | 82 | 1.50 | 108 |

[Examples 7 and 8]

The perfluoropolyether-modified polysilazanes synthesized in examples 1 and 2 were each dissolved in HFMX (hexafluorometaxylene) to prepare a 20% by mass solution that was then used as a treatment agent. The treatment agent was applied to an anti-reflective film (a PET film having a layer of $SiO_2$ vapor-deposited on the film surface) (8 × 15 × 0.2 cm) by vacuum vapor deposition (10 mg of the treatment agent, 3.8 × $10^{-3}$ Pa, 740°C), and the applied film was then left to stand for 24 hours in an atmosphere at 40°C and a relative humidity of 80%, thereby curing the applied film and forming a cured coating. The thus formed test samples were evaluated in the same manner as examples 4 to 6. The evaluation results are shown in Table 2.

[Comparative example 3]

With the exception of replacing the perfluoropolyether-modified polysilazanes used in examples 7 and 8 with

the perfluoroalkyl-modified polysilazane represented by formula (7) shown above, evaluations were performed using the same methods as examples 7 and 8. The evaluation results are shown in Table 2.

[Table 2]

| | Polymer | Water and oil repellency (degrees) | | Durability (degrees) |
|---|---|---|---|---|
| | | Water | Oleic acid | |
| Example 7 | Example 1 | 115 | 79 | 109 |
| Example 8 | Example 2 | 114 | 78 | 108 |
| Comparative example 3 | Formula (7) | 109 | 83 | 85 |

[Example 9, Comparative example 4]

The perfluoropolyether-modified polysilazane synthesized in example 1 and the perfluoropolyether-modified amidosilane represented by formula (6) shown above were each dissolved in Novec HFE-7200 to prepare a 0.15% by mass solution that was then used as a treatment agent. Each treatment agent was applied to the surface of a ceramic tile (98 × 98 × 4 mm) by spraying (air brush, 0.5 MPa), and the tile was then left to stand for 10 minutes in an atmosphere at 23°C and a relative humidity of 40%, thus forming a cured coating. Using the thus prepared test pieces, the contact angle relative to water was measured, and an evaluation (4) described below was also performed. The evaluation results are shown in Table 3.

(4) Evaluation of alkali durability

The test sample was immersed in a 0.1 N aqueous solution of NaOH for 24 hours, and following subsequent washing, the contact angle relative to water was measured using the method described above in evaluation (1), and the measured value was used to evaluate the alkali durability.

[Table 3]

| | Polymer | Alkali durability Water contact angle (degrees) | |
|---|---|---|---|
| | | Prior to immersion | Following immersion |
| Example 9 | Example 1 | 106 | 102 |
| Comparative example 4 | Formula (7) | 46 | 38 |

The examples 4 to 8 all displayed water and oil repellency equal or superior to that of the conventional products (comparative examples 1 to 3), and also exhibited excellent releasability and abrasion durability. Furthermore, example 9 exhibited a faster curing rate than comparative example 4, and also exhibited excellent alkali durability.

From the results described above it is clear that the perfluoropolyether-modified polysilazane of the present invention can be cured at room temperature, is capable of forming a tough coating on a substrate surface without application of a primer, and can be favorably used as a surface treatment agent having excellent water and oil repellency and releasability and the like.

**Claims**

**1.** A perfluoropolyether-modified polysilazane consisting of silazane units represented by a formula (1):

$$\mathbf{F(C_xF_{2x}O)_mC_yF_{2y}\text{-}Q\text{-}Si(NH)_{1.5}} \qquad (1)$$

wherein Q represents a divalent organic group, m represents an integer of 1 or greater, and x and y each represents an integer of 1 to 3.

**2.** The perfluoropolyether-modified polysilazane according to Claim 1, wherein in the formula (1), a perfluoropolyether portion represented by $F(C_xF_{2x}O)_mC_yF_{2y}$- is represented by a formula:

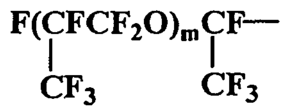

wherein m is as defined above.

**3.** A surface treatment agent comprising the perfluoropolyether-modified polysilazane defined in Claim 1 and/or a partial hydrolysis-condensation product thereof as an active ingredient.

**4.** A cured coating of the perfluoropolyether-modified polysilazane defined in Claim 1 and/or a partial hydrolysis-condensation product thereof.

**5.** An article comprising a substrate and a cured coating of the perfluoropolyether-modified polysilazane defined in Claim 1 and/or a partial hydrolysis-condensation product thereof formed on a surface of the substrate.

**6.** The article according to Claim 5, wherein the substrate is an optical member, a sanitary product, a glass for a transport vehicle, a general industrial glass, a glass food dish, a construction material or a telephone box.

Fig. 1

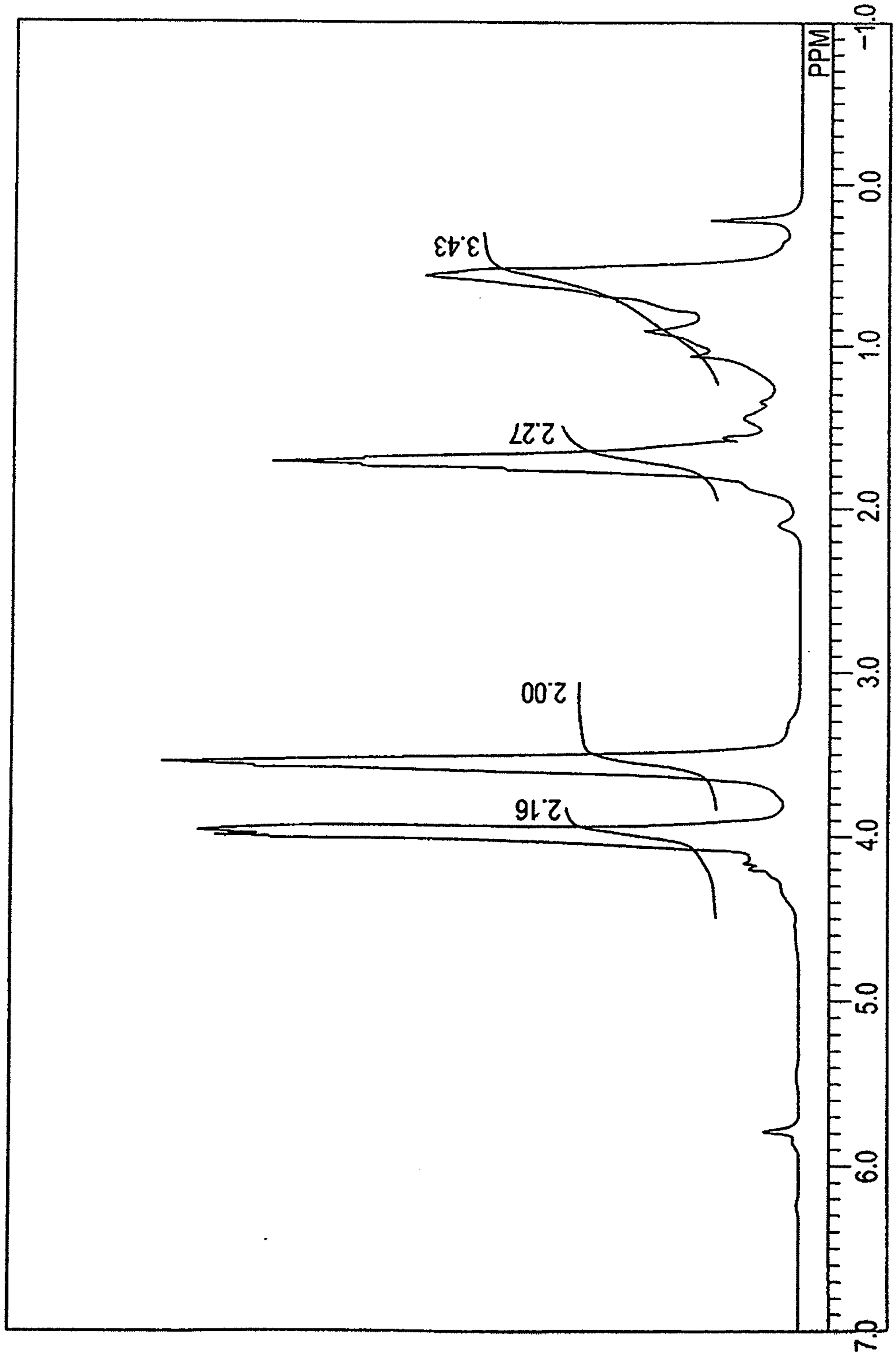

Fig. 2

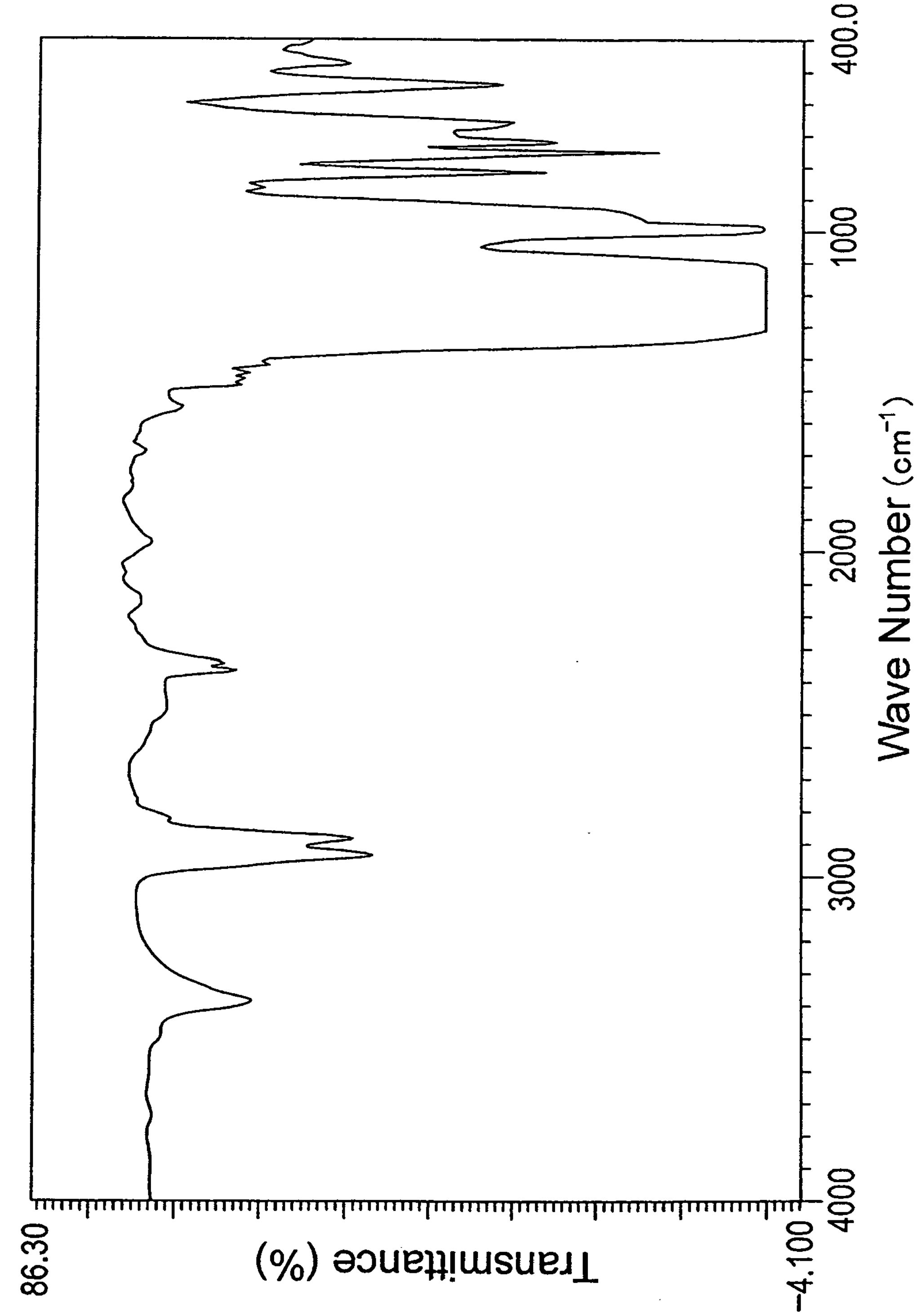
86.30
Transmittance (%)
-4.100
4000
3000
2000
1000
400.0
Wave Number (cm-1)

Fig. 3

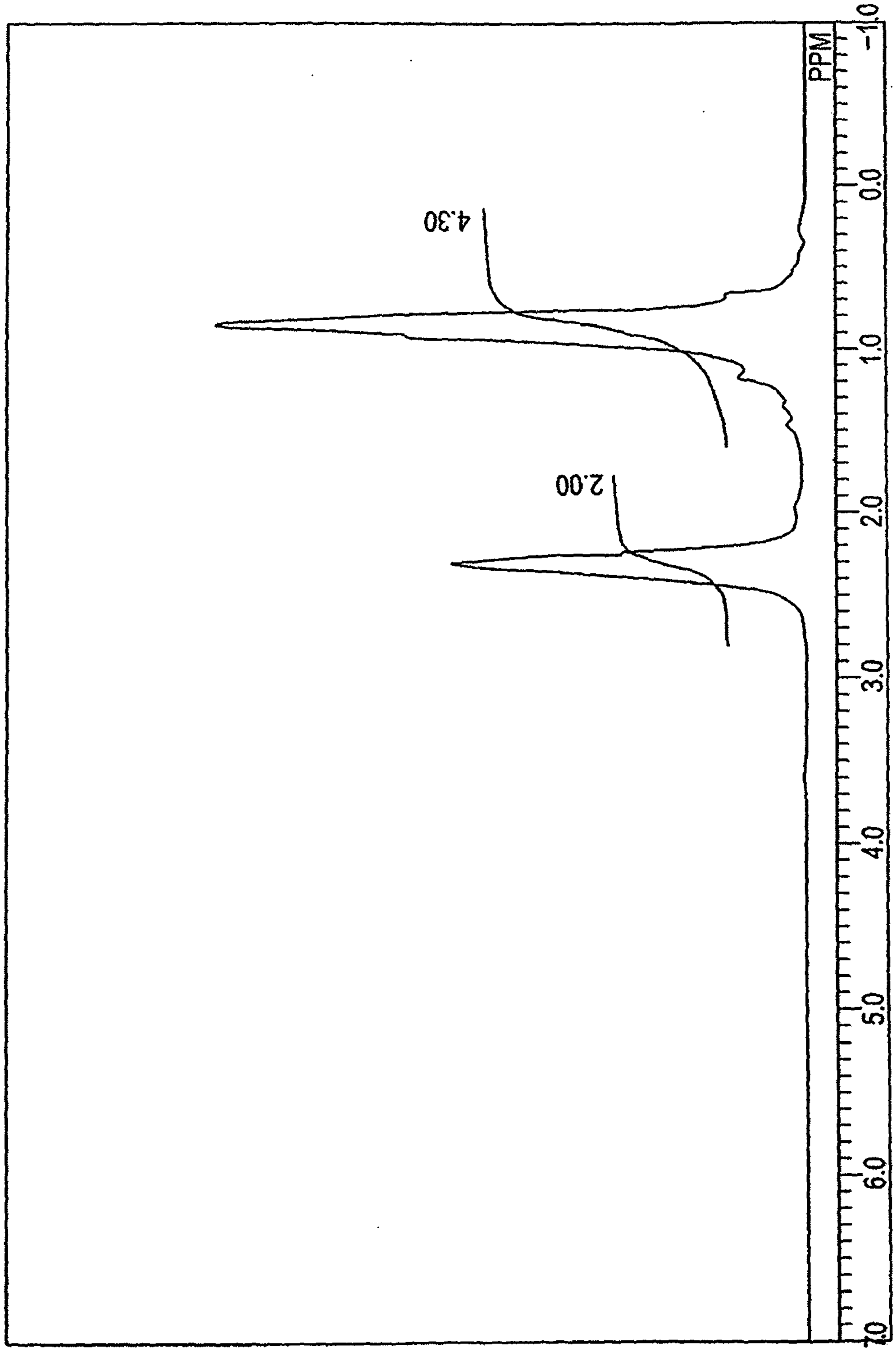

Fig. 4

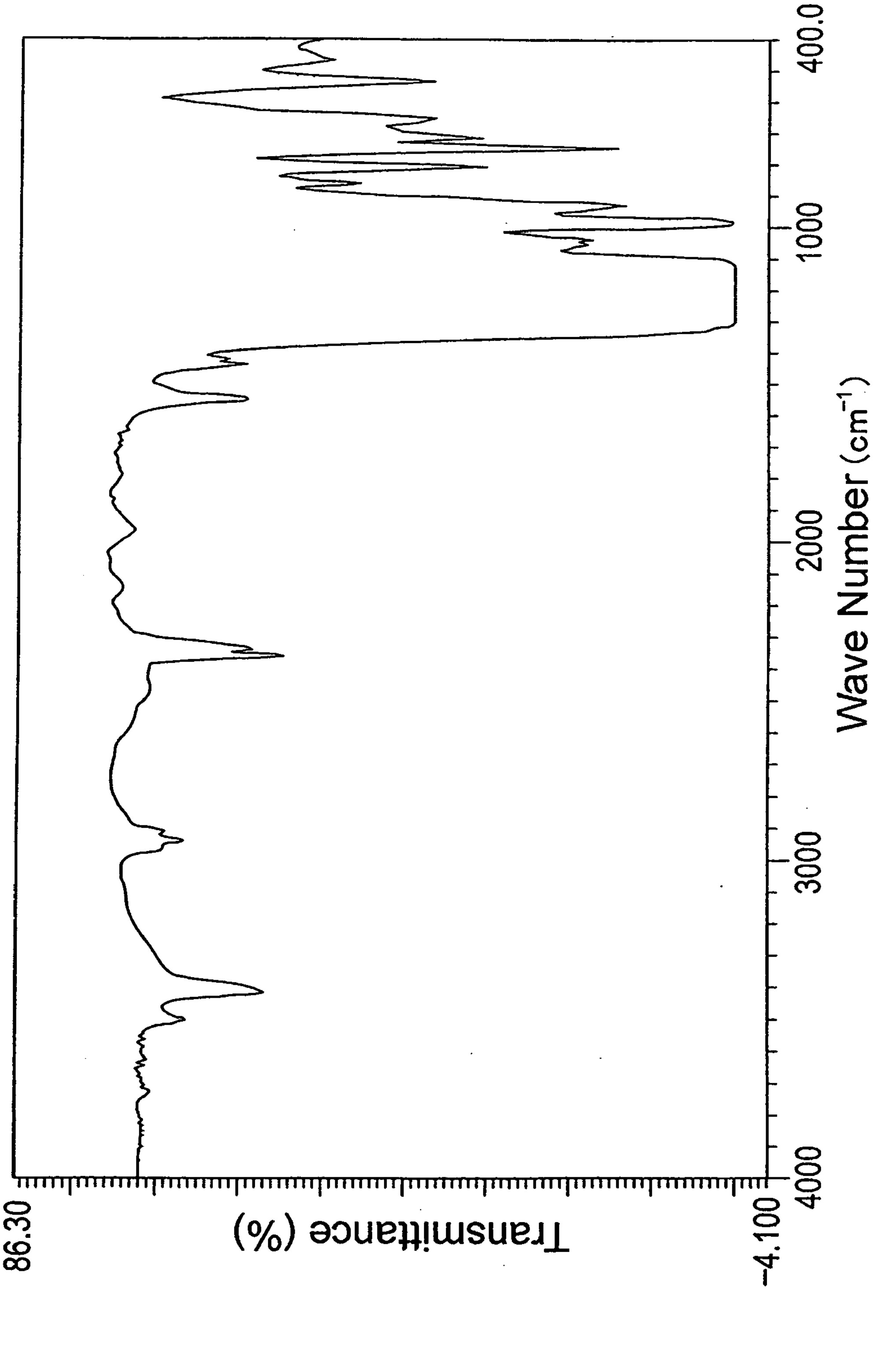
86.30
-4.100
Transmittance (%)
4000
3000
2000
1000
400.0
Wave Number (cm-1)

Europäisches Patentamt
European Patent Office
Office européen des brevets

# EUROPEAN SEARCH REPORT

Application Number
EP 09 00 9291

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 393 874 A (SHINETSU CHEMICAL CO [JP]) 3 March 2004 (2004-03-03)<br>* page 4, line 14 - line 56; claims; example 1 *<br>----- | 1-6 | INV.<br>C08G77/62<br>C08G65/336 |
| A | US 4 678 688 A (ITOH KUNIO [JP] ET AL) 7 July 1987 (1987-07-07)<br>* column 3, line 58; claims *<br>----- | 1 | |
| A | DATABASE WPI Week 199206<br>Thomson Scientific, London, GB; AN 1992-045759<br>XP002547245<br>& JP 03 290437 A (SHINETSU CHEM IND CO LTD) 20 December 1991 (1991-12-20)<br>* abstract *<br>----- | 1 | |
| A | US 4 255 549 A (CHRISTOPHLIEMK PETER ET AL) 10 March 1981 (1981-03-10)<br>* claims *<br>----- | 1 | |
| | | | TECHNICAL FIELDS SEARCHED (IPC) |
| | | | C08G |

The present search report has been drawn up for all claims

| Place of search | Date of completion of the search | Examiner |
|---|---|---|
| The Hague | 24 September 2009 | Deraedt, Gilbert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

2

EPO FORM 1503 03.82 (P04C01)

## ANNEX TO THE EUROPEAN SEARCH REPORT ON EUROPEAN PATENT APPLICATION NO. EP 09 00 9291

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2009

| Patent document cited in search report | | Publication date | Patent family member(s) | | Publication date |
|---|---|---|---|---|---|
| EP 1393874 | A | 03-03-2004 | JP | 3915905 B2 | 16-05-2007 |
| | | | JP | 2004082433 A | 18-03-2004 |
| | | | US | 2004039111 A1 | 26-02-2004 |
| US 4678688 | A | 07-07-1987 | NONE | | |
| JP 3290437 | A | 20-12-1991 | NONE | | |
| US 4255549 | A | 10-03-1981 | DE | 2834027 A1 | 14-02-1980 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 58167597 A
- US 6200684 B1
- JP 7069680 A
- US 2564674 A